# EUROPEAN PATENT SPECIFICATION

(11) **EP 3 378 166 B1**
(45) Date of publication and mention of the grant of the patent: **23.03.2022**
(21) Application number: 16867102.2
(22) Date of filing: 17.11.2016
(51) Int. Cl.: H04M 1/72454, H04M 1/72463, H04M 1/60

(54) **LIMITING MOBILE DEVICE FUNCTIONALITY IN A VEHICLE**
BEGRENZUNG DER MOBILVORRICHTUNGSFUNKTIONALITÄT IN EINEM FAHRZEUG
LIMITATION DE LA FONCTIONNALITÉ D'UN DISPOSITIF MOBILE À L'INTÉRIEUR D'UN VÉHICULE

(30) Priority: 20.11.2015 US 201514947385
(43) Date of publication of application: 26.09.2018
(73) Proprietor: CBROS Technologies, LLC, Winter Park, Florida 32792 (US)
(72) Inventor: MAHAR, Stephen Nelson, Portsmouth, Maine 03801 (US); WILLIAMS, JR., Donald Edward, Winter Park, Florida 32792 (US)
(74) Representative: Heinze, Ekkehard
(86) International application number: PCT/US2016/062434
(87) International publication number: WO 2017/087613

(56) References cited:
- WO-A1-2011/085250
- US-A1- 2010 210 254
- US-A1- 2010 233 959
- US-A1- 2011 009 107
- US-A1- 2011 021 234
- US-A1- 2011 093 161
- US-A1- 2011 294 465
- US-A1- 2014 274 026

## Description

### FIELD OF INVENTION

The present disclosure generally relates to mobile devices and vehicles; more specifically, to detecting the motion status of a vehicle and altering the operating state of the mobile device based on the motion status.

### BACKGROUND

The personal, societal, and economic impacts of texting while driving are well chronicled. Studies show that texting while driving increases the risk of an accident by 2300%. Texting while driving resulted in 16,141 deaths in the U.S. between 2001 and 2007, and in 2009, 5,474 people were killed in the U.S. because of accidents that involved distracted driving. Another 448,000 were injured.

Younger generations have grown up using texting and email from a very young age. Most teenagers send hundreds, if not thousands, of texts each week, making it their primary form of communication. It is an engrained habit. Stepping away from it voluntarily, even when presented with the dangers to themselves and others they may impact, is very difficult. The increasing amount of accidents, cost, injuries, and deaths is alarming.

Current systems have attempted to address this issue but have major drawbacks. Such drawbacks include reliance on multiple voluntary actions by the driver and/or reliance on the motion of the vehicle (i.e. a certain minimum speed). There are many documented crashes involving a driver texting while driving at a slow speed, such as rolling slowly through a stop or red light into an intersection. Some systems rely on wireless transmissions, such as conventional Bluetooth^{®}, that require synchronization with each vehicle. Some systems also gather driver performance data, such as speed or number of hard stops. Such systems may be considered intrusive on the driver's privacy. Many systems can be readily defeated by a driver determined to do so. In addition, some systems' components can be disabled without accountability to a monitoring entity.

As such, there is a need in the art for a system that can automatically limit mobile device functionality, including the ability to text, when a vehicle is in Operation. Relevant prior art is constituted by the following patent publications:
US 2014/274026 A1, US 2011/009107 A1, US 2011/021234 A1, US 2010/210254 A1 and US 2011/093161 A1.

### SUMMARY

Herewith, a disabling device with the features defined in claim 1, a system for limiting mobile device functionality in a vehicle comprising the features of claim 3 are provided. Advantageous embodiments are defined in the respective dependent claims.

In accordance with the teachings disclosed herein, embodiments related to a device, and system for limiting mobile device functionality in a vehicle are disclosed. The vehicle has a disabling device associated therewith and the disabling device comprises a motion detector.

### BRIEF DESCRIPTION OF THE DRAWINGS

FIG. 1 is a block diagram of a system for limiting mobile device functionality in a vehicle.
FIG. 2 is a flowchart of a method of limiting mobile device functionality in a vehicle from the perspective of the disabling device.
FIG. 3 is a flowchart of a method of limiting mobile device functionality in a vehicle from the perspective of the disabling device.
FIG. 4 is a flowchart of a method of issuing monitoring alerts from the perspective of the disabling device.
FIG. 5 is a flowchart of method of monitoring three exemplary events from the perspective of the disabling device.
FIG. 6 is a block diagram illustrating an exemplary mobile device on which at least a portion of the method of limiting mobile device functionality in an operating vehicle may occur.
FIG. 7 is a flowchart of a method of limiting device functionality in an operating vehicle from the perspective of the mobile device.
FIG. 8 is a flowchart of a method of limiting mobile device functionality in a vehicle from the perspective of the mobile device.
FIGS. 9A through 9C are flowcharts of methods of issuing monitoring alerts from the perspective of the mobile device.

### DETAIL DESCRIPTION OF THE EMBODIMENTS

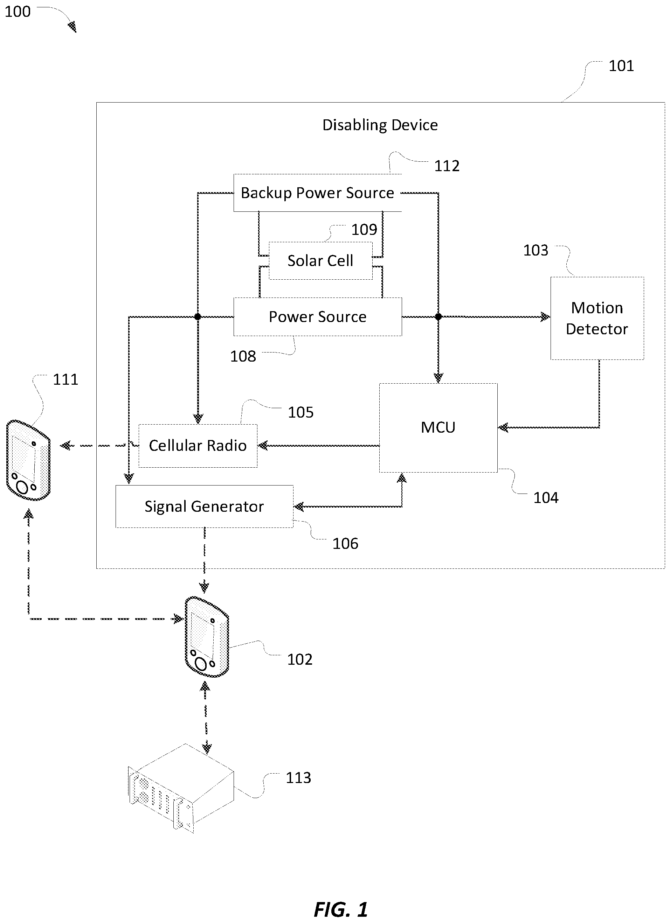

A detailed description of a system, device, and method for limiting mobile device functionality in an operating vehicle will now be presented with reference to FIGS. 1 through 9.

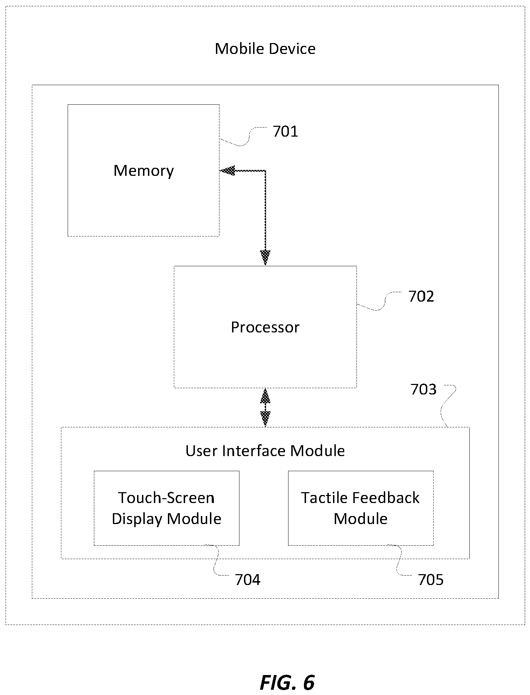

In FIG. 1, system 100 comprises disabling device 101 and mobile device 102. Disabling device 101 can be mounted, installed or otherwise positioned in a vehicle, such as for example cars, trucks, buses, motorcycles, trains and other motor vehicles. Disabling device 101 may be encased in a compact enclosure, such as a polycase. Disabling device 101 may be compact for discrete mounting on a vehicle windshield. Disabling device may be positioned on the interior of the vehicle at or near the corner of the windshield, on the windshield near the rearview mirror or at another location within the vehicle. Disabling device 101 comprises motion detector 103, processor or microcontroller unit (MCU) 104 in communication with motion detector 103, cellular radio 105 in communication with MCU 104, signal generator 106 in communication with MCU 104, power source 108 in communication with motion detector 103, MCU 104, cellular radio 105, and signal generator 106. Disabling device 101 may optionally comprise backup power source 112 in communication with MCU 104. Backup power source 112 may also be in communication with one or more of motion detector 103, cellular radio 105, and signal generator 106. Disabling device may optionally comprise solar cell 109 in communication with power source 108. Solar cell 109 may also be in communication with backup power source 112. Mobile device 102, further shown and described below and in FIG. 6, has a software application, or app, (e.g. Device Owner Application (DOA), mobile device management system or other applicable software) residing thereon that is capable of receiving a disabling signal from disabling device 101.

Motion detector 103 determines the motion status of a vehicle. Motion detector 103 may be, for example, an accelerometer, a gyroscope or both an accelerometer and a gyroscope. Motion detector 103 may detect, for example, acceleration, direction (up/down/forward/backward), speed or a combination thereof. Motion detector 103 transmits a signal comprising the motion status to MCU 104. Upon arrival at MCU 104, the signal is converted into a signal readable by MCU 104. This can be accomplished, for example, through the use of peripheral interface technology such as UART/SPI (universal asynchronous receiver/transmitter/serial peripheral interface) or I2C (Inter-Integrated Circuit).

MCU 104 uses the motion status within the signal received from motion detector 103 to ascertain the motion status of the vehicle. If the motion status indicates that the vehicle is in motion, MCU 104 instructs signal generator 106 to broadcast a disabling signal. MCU 104 interfaces with signal generator 106, which may be, for example, a 802.11 radio, a Bluetooth^{®} beacon, a Bluetooth^{®} low energy beacon or any device that can transmit a similar electronic signal or trigger (which may optionally comprise an identifier), via any known mechanism, for example, UART or SPI. Motion detector 103 may detect movement of the vehicle causing it to produce a motion status indicating that the vehicle is in motion. Alternatively, motion detector 103 may only produce a motion status indicating that the vehicle is in motion once the motion has surpassed a certain threshold, such as, for example a pre-determined speed, a predetermined acceleration or a combination thereof. If the vehicle is not moving or alternatively, has not exceeded a movement threshold, motion detector 103 may produce a motion status indicating that the vehicle is not in motion. Alternatively, motion detector may not produce a signal, which may be interpreted by MCU 104 to mean that the vehicle was not in motion and that the motion status should so indicate. MCU 104 may continuously or periodically monitor motion detector 103 for vehicle movement.

If a disabling signal has been broadcast and mobile device 102 is in range of the broadcasting signal, the software residing on mobile device 102 will alter the system configuration of mobile device 102 to restrict the user's ability to perform certain tasks including, for example, using the keyboard, using the touch screen or sending and/or receiving text messages, email messages, and/or phone calls. Use of some features, such as maps, dialing 911 and voice-activated cal ling can still be permitted. Broadcast of the disabling signal will continue or be performed at regular intervals (e.g. every 20 seconds) until the motion status indicates that that the vehicle is not in motion. The disabling signal can be, for example, a Bluetooth^{®} low energy beacon signal (or transmission). The broadcasting range of the disabling signal can be limited to only encompass the driver area or vehicle (e.g. 3-10 feet). The broadcast of the disabling signal may continue after the motion status of the vehicle becomes non-moving for a predetermined amount of time (e.g. one to two minutes).

MCU 104 ensures disabling device 101's operation by checking for connectivity to other disabling device components and for installation in and/or removal from a vehicle. This can be accomplished with internal programming and/or a physical or software switch. As an example of monitoring for installation and/or removal, if disabling device is attached to the vehicle (for example, on the windshield) using suction cups or adhesive or another similar mounting mechanism, a pressure switch can be used to detect installation and/ or removal of the disabling device. In addition, MCU 104 monitors power source 108 for the status of the power supply.

System 100 can further include monitoring party's device 111. Cellular radio 105 communicates wirelessly with monitoring party's device 111. Monitoring party's device 111 may monitor the status of disabling device 101 and the app running on mobile device 102. Cellular radio 105 may use GSM cellular modules (global system for mobile communications) or any other known transmission service. Cellular radio 105 may include a subscriber identity module (SIM) card and may be equipped with SMS text capabilities. Cellular radio 105, at the direction of MCU 104, can send messages/alerts, such as, for example a short message service (SMS) push notification comprising an identifier of the disabling device to monitoring party's device 111, when certain events occur. For example, a message may be sent when disabling device 101 is activated, when disabling device 101 is removed from the vehicle, when the available power in power source 108 or back-up power source 112 is low or when cellular radio 105 has low cellular service as well as periodic alerts showing the device is working properly. The app running on mobile device 102 can also send notifications, such as 'app installed', 'app disabled', or 'app functioning normally', to monitoring party's device 111. The notifications from the app may include mobile device 102's phone number. A monitoring party may be an insurance company or a concerned parent. Monitoring party's device 111 enables the monitoring party to receive information verifying that disabling device 101 and the app running on mobile device 102 are operational.

Power source 108 may be, for example, a battery or a long life battery. Power source 108 may provide power to MCU 104, motion detector 103, cellular radio 105, and/or signal generator 106 if the element itself is not self-powered or it may serve as a secondary power source for any self-powered element. Disabling system may be hard- wired to the vehicle it is installed in. In this case, MCU 104, motion detector 103, cellular radio 105, and/or signal generator 106 may draw power from the vehicle's power source. Power source 108 may then be used in the event disabling device 101 is removed from the vehicle or the hard-wired connection is severed.

Backup power source, which may be for example a backup battery, may provide power to MCU 104 and cellular radio 105 to allow cellular radio 105 to send an alert to monitoring party 111 when MCU 104 detects that the power available in power source 108 is low. Backup power source 112 may also provide power to signal generator 106 and motion detector 103 when the power available from power source 108 is low to allow disabling device 101 to operate continuously.

MCU 104 may also store information related to the driver/user or to the vehicle disabling device 101 is attached to. Such information may include the account number and narre of the user and the make, year, and/or model of the vehicle. Such information can also be transmitted, as needed, via cellular radio 103 to, for example, monitoring party's device 111, or via signal generator 106 to, for example, mobile device 102.

Solar cell 109 may be used to recharge power source 108 and/or backup power source 112.

System 100 may further include remote server 113 having a database (whitelist) containing a list of media access control (MAC) addresses or other unique identifier assigned to the signal generator of each disabling device in operation. Remote server 113 may be in bi-directional, wireless communication with mobile device 102. This list, or whitelist, can be queried by the software running on a mobile device to determine if a received disabling signal is coming from a valid source. This may prevent a bad actor from attempting to disable a phone by sending a disabling signal from an unauthorized device.

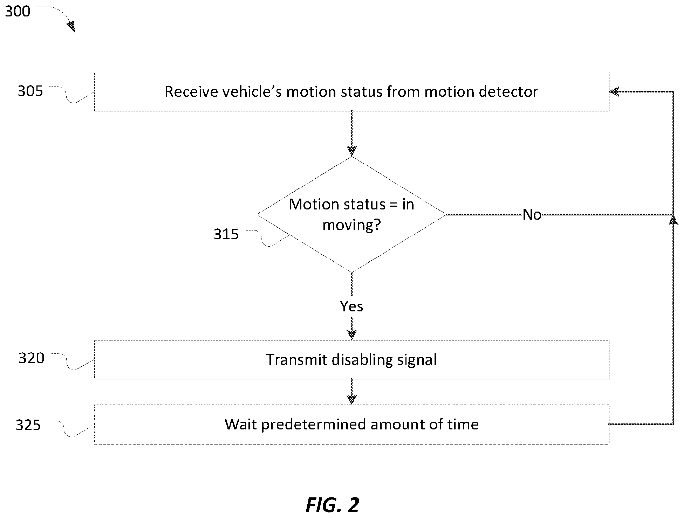

A method related to the present invention from the perspective of disabling device 101 (method 300) is illustrated in the flowchart in FIG. 2 with reference to disabling device 101 of FIG. 1. As shown in Operation 305, disabling device 101 receives the motion status of the vehicle from motion detector 103. If, in Operation 315, the motion status indicates that the vehicle is not in motion, disabling device 101 continues receiving the motion status from motion detector 103. Otherwise, disabling device 101, in Operation 320, transmits a disabling signal using signal generator 106. Disabling device 101 then repeats the process. Optionally, disabling device 101 can, in Operation 325, wait a predetermined amount of time before repeating this process.

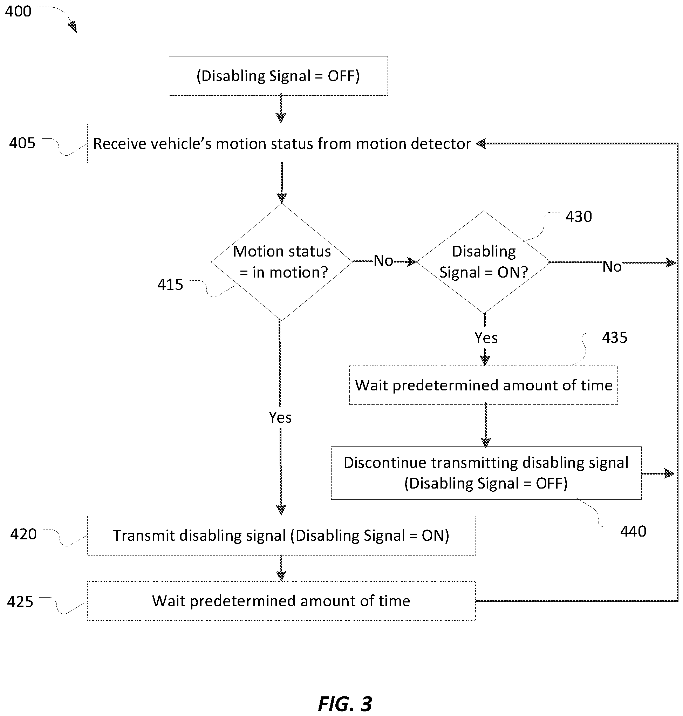

Another method related to the present invention from the perspective of disabling device 101 (method 400) is illustrated in the flowchart of FIG. 3 with reference to disabling device 101 of FIG. 1. As shown, method 400 begins initially with the disabling signal turned off. In operation 405, disabling device 101 receives the motion status of the vehicle from motion detector 103. If, in operation 415, the motion status indicates that the vehicle is in motion, disabling device 101, in Operation 420, transmits a disabling signal using wireless signal generator 106. Broadcast of the disabling signal continues while the vehicle is in motion. Disabling device 101 then repeats the process. Optionally, disabling device 101 can, in operation 425, wait a predetermined amount of time before repeating this process. If, in operation 415, the motion status indicates that the vehicle is not in motion, then disabling device 101, in operation 430, determines if the disabling signal is turned on. If the disabling signal is off, then the process repeats. If the disabling signal is on, then it is turned off in operation 440 and the process repeats. Optionally, disabling device 101 can, in Operation 440, wait a predetermined amount of time before turning off disabling signal and repeating the process. Waiting a predetermined amount of time (e.g. one to two minutes) before repeating the process, allows for the host vehicle to come to a temporary stop (e.g. at a stop light or stop sign) without allowing the mobile device to return to normal operations.

Optionally, MCU 104 can monitor signal generator 106 for endpoint connectivity (e.g. a connection to mobile device 102) if such connectivity is possible with the technology used for the signal generator. Once a connection is established, disabling device 101 can send a wireless signal or notification to mobile device 102.

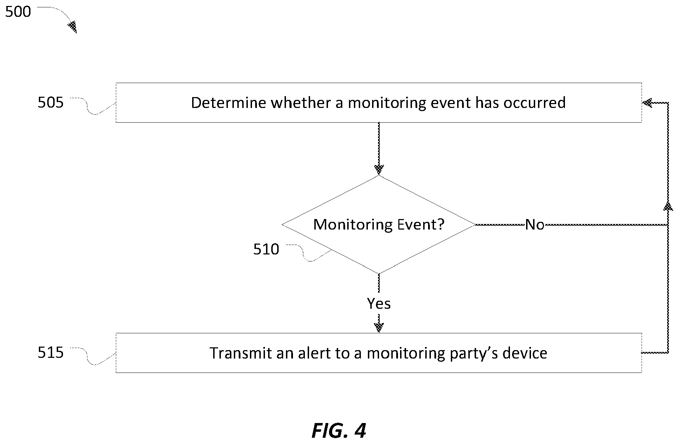

As discussed previously, cellular radio 105, at the direction of MCU 104, can send alerts, such as, for example a short message service (SMS) push notification, to monitoring party's device 111, when certain events occur. An embodiment of a portion of the method of the present invention that issues these alerts is shown in FIG. 4. In Operation 505 of method 500, disabling device 101 determines whether a monitoring event has occurred. If, in Operation 510, a monitoring event has occurred, an alert will be transmitted to monitoring party's device 111 in Operation 515. If, in operation 510, no monitoring event has occurred, then disabling device 101 continues checking for a monitoring event.

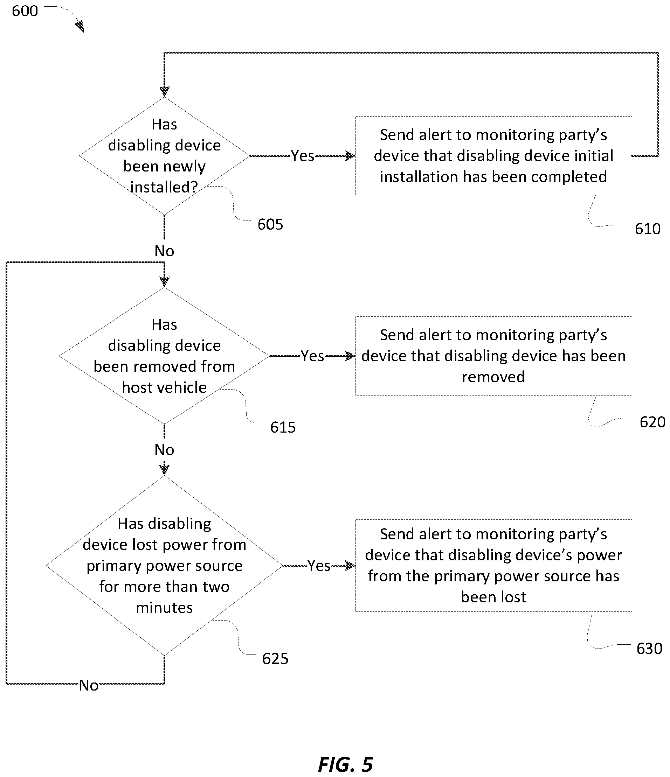

Monitoring events may include disabling device 101 being removed from a host vehicle, disabling device 101 being secured in a host vehicle, or disabling device 101 losing power for a predetermined amount of time. A method of monitoring these three exemplary events (method 600) is illustrated in FIG. 5 with reference to disabling device 101 of FIG. 1. In operation 605, disabling device 101 determines if it has been newly installed in a host vehicle. If disabling device has been newly installed, then, in operation 610, cellular radio 105 sends an alert to monitoring party's device 111 indicating that the initial installation of disabling device 101 is complete. If the disabling device has not been newly installed, then, in operation 615, disabling device 101 determines if it has been removed from the vehicle. If disabling device 101 has been removed from the vehicle, then, in operation 620, cellular radio 105 sends an alert to monitoring party's device 111 indicating that disabling device 101 has been removed. If disabling device 101 is still installed, disabling device 101 determines if it has lost power from power source 108 for a predetermined amount of time (e.g. two minutes).

This can be determined by monitoring MCU 104's interface with power source 108. If disabling device 101 has lost power from power source 108 for a predetermined amount of time, cellular radio 105, which may be powered by backup power source 112 or its own power source, sends an alert to monitoring party's device 111 indicating that disabling device 101 has lost power from power source 108. If disabling device 101 has not lost power from power source 108, then the process continues monitoring for disabling device 101's removal from the vehicle (operation 615) and disabling device 101 losing power from power source 108 (operation 625).

Disabling device 101 can also perform a seif-test to ensure that its disabling signal is transmitting and power source 108 is operational. A monitoring alert can then be sent at pre-determined intervals (e.g. every 30 days) to monitoring party's device 111 indicating that disabling device 101 is functioning properly.

FIG. 6 is a block diagram showing a mobile device, which may be, for example mobile device 102 as described above and shown in FIG. 1. The exemplary mobile device includes memory 701, processor 702 and user interface module 703, which includes touch-screen display module 704 and tactile feedback module 705, all of which is described in further detail below. It should be understood, that a mobile device as illustrated and hereinafter described is merely illustrative of a mobile device that could benefit from embodiments of the invention and, therefore, should not be taken to limit the scope of the invention. While one embodiment of the mobile device is illustrated for purposes of example, other types of mobile electronic devices, such as, but not limited to, mobile phones, smart phones, portable digital assistants (PDAs), tablets, mobile computing devices, gaming devices, laptop computers, media players, and other types of mobile electronic systems, may readily employ embodiments of the invention.

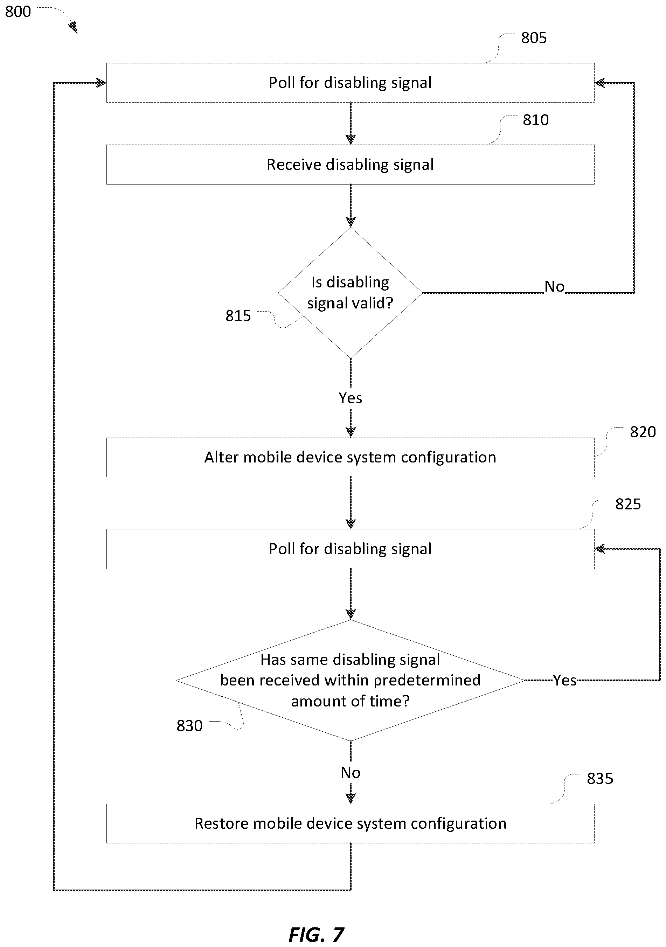

A method related to the present invention from the perspective of mobile device 102 (method 800) is illustrated in the flowchart of FIG. 7. As shown in operation 805, software running an mobile device 102 polls for a disabling signal. Once a disabling signal is received (in operation 810), the software determines if it is valid in operation 815. If the disabling signal is not valid, the software continues polling for a disabling signal in operation 805. If the disabling signal is valid, then the software alters the system configuration of mobile device 102 in operation 820 to restrict the user's ability to perform certain tasks. These tasks may include, for example, using the keyboard, or sending and/or receiving text messages and/or email messages, placing and/or receiving phone calls, or placing and/or receiving phone calls when not in hands-free mode. In operation 825, the software continues to poll for a disabling signal. In operation 830, the software determines if the same disabling signal has been received within a predetermined period of time. If it has, then the software continues to poll for a disabling signal (Operation 825). If the same disabling signal has not been received within a predetermined period of time, the software restores the system configuration of mobile device 102 in Operation 835.

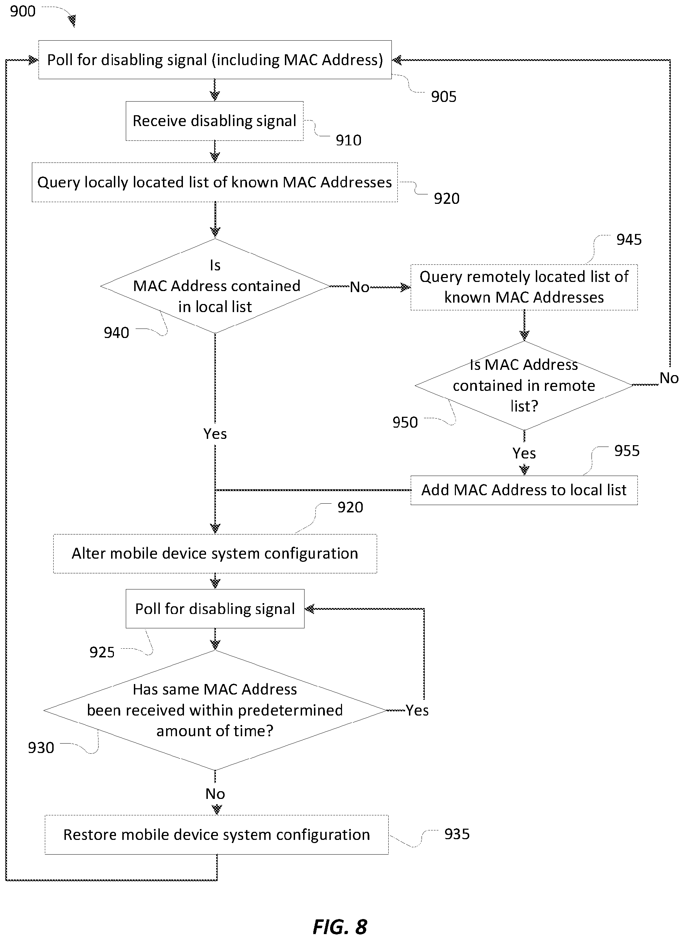

Another method related to the present invention from the perspective of mobile device 102 (method 900) is illustrated in the flowchart of FIG. 8. As shown in Operation 905, software running an mobile device 102 polls for a disablingsignal. The disabling signal, which may be, for example a Bluetooth^{®} beacon signal (or transmission), includes identifiers, such as, for example, a universally unique identifiers (UUID) or a MAC address. Once a disabling signal is received (in Operation 910), the software queries, in Operation 920, a locally located list of known identifiers to determine, in Operation 940, if the identifier received in the disabling signal is contained in the local list. If the identifier is not in the local list, then, in Operation 945, a remotely located list of known identifiers is queried to determine, in Operation 950, if the identifier is contained in the remote list. If the identifier is not contained in the remote list, the identifier is not recognized and the software continues polling for a disabling signal in Operation 905. If the MAC address is contained in the remote list, the MAC address is added to the local list in Operation 955. Once a valid MAC address has been confirmed, the software alters the system configuration of mobile device 102 in Operation 920 to restrict the user's ability to perform certain tasks including, for example, using the keyboard, or sending and/or receiving text messages, email messages, and/or phone calls. In Operation 925, the software continues to poll for a disabling signal. In Operation 930, the software determines if the same network identifier has been received within a predetermined period of time. If it has, then the software continues to poll for a disabling signal (Operation 925). If the same disabling signal has not been received within a predetermined period of time, the software restores the system configuration of mobile device 102 in Operation 935.

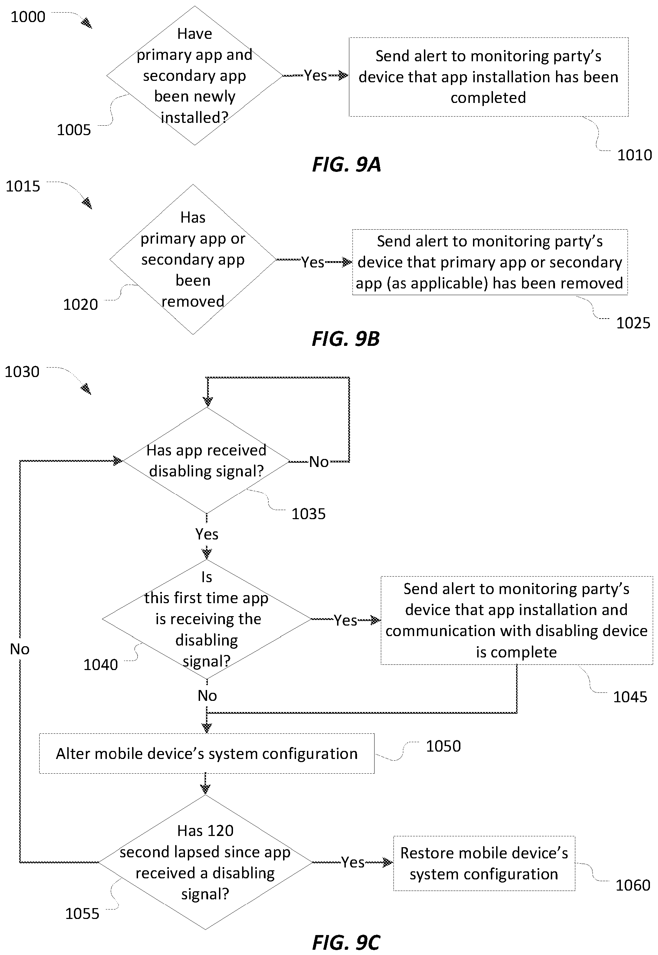

Like disabling device 101, the software running on mobile device 102 can protect itself from tampering and verify its own operable status by transmitting alerts, such as, for example, a SMS push notification containing, for example, mobile device 102's phone number, to monitoring party's device 111. Monitoring events can include the software being installed on mobile device 102 or the software being disabled. The software running on mobile device 102 may comprise two separate apps - a primary system app and a secondary app. The primary app may be monitored by the secondary app. The purpose of the secondary app is to send an alert to monitoring party device 111 in the event of removal of the primary app. The primary app also monitors the secondary app and sends an alert to monitoring party device 111 in the event of removal of the secondary app. In this respect the primary and secondary app independently monitor each other for removal, making the app portion of the system self-protecting. Methods (methods 1000, 1015, and 1030) that issue exemplary alerts originating from mobile device 102 are shown in FIGS. 9A through 9C.

As shown in FIG. 9A, method 1000 determines, in Operation 1005, if the primary app and the secondary app have been newly installed on mobile device 102. If the software has been newly installed, then, in Operation 1010, mobile device 102 sends an alert to monitoring party's device 111 indicating that the software installation has been completed.

As shown in FIG. 9B, method 1015 determines, in Operation 1020, if the primary app or the secondary app has been removed. If either app has been removed, then, in operation 1025, an alert is sent to monitoring party's device 111 indicating that the primary app or secondary app (as applicable) has been removed.

As shown in FIG. 9C, method 1030 determines, in Operation 1035, if mobile device 102 has received a disabling signal. If no disabling signal has been received, then the software continues to wait for the disabling signal to arrive. If a disabling signal has been received, then, in Operation 1040, the software determines if it is the first time mobile device 102 is receiving the disabling signal. If this is not the first time mobile device 102 has received a disabling signal, then the system configuration of mobile device 102 is altered in Operation 1050. If this is the first time mobile device 102 has received a disabling signal, then, in Operation 1045, an alert is sent to monitoring party's device 111 indicating that the software installation and communication with disabling device 102 has completed. The system configuration of mobile device 102 is then altered in Operation 1050. After mobile device 102's system configuration has been altered, the software, in Operation 1055, determines if a predetermined amount of time (e.g. two minutes) has lapsed since mobile device 102 received a disabling signal. If not, then the software continues polling for a disabling signal in Operation 1035. If the predetermined amount of time has lapsed then the software restores the system configuration of mobile device 102 in Operation 1060.

The software running on mobile device 102 can also perform a self-test to ensure that it is receiving disabling signals at expected intervals (e.g. every 15 seconds or twice within any 30 second window) and it is altering mobile device 102's system configuration upon receipt of a valid disabling signal. A monitoring alert can then be sent at pre-determined intervals (e.g. every 30 days) to monitoring party's device 111 indicating that the software running on mobile device 102 is functioning properly.

The following are exemplary scenarios demonstrating pre-operational functionality of embodiments of the present invention.

Disabling device set-up - the disabling device is intact but not in the vehicle:

| | |
|---|---|
| Motion detector: | Inactive |
| Power source (battery): | Inactive (charged) |
| MCU: | Inactive |
| Signal generator: | Inactive |
| Cellular Radio: | Inactive |

Disabling device installed - the vehicle is not moving:

| | |
|---|---|
| Motion detector: | Power available from disabling device's battery |
| Power source (battery): | Inactive (charging) |
| MCU: | Recognizes connectivity to the motion detector via internal programming, physical switch or software switch and initiates a monitoring alert (e.g. push notification); analyzes the signal from the motion detector for the motion status of the vehicle |
| Signal generator: | Inactive |
| Cellular Radio: | Transmits 'Disabling device installed' alert to the monitoring party's device |

Vehicle not moving; disabling device installed:

| | |
|---|---|
| Motion detector: | Active |
| Power source (battery): | Active |
| MCU: | Active; monitoring the motion detector |
| Signal generator: | Inactive |
| Cellular Radio: | Inactive |

Disabling device is removed:

| | |
|---|---|
| Motion detector: | Inactive |
| Power source (battery): | Active (discharging); Powers the MCU and the cellular radio |
| MCU: | Recognizes the lack of connectivity of the disabling device to the vehicle via internal programming, physical switch or software switch; engages the battery and initiates a monitoring alert indicating that the disabling device has been disconnected |
| Signal generator: | Inactive |
| Cellular Radio: | Transmits monitoring alert (e.g. push notification) indicating that the disabling device has been disconnected to the monitoring party's device |

The following are exemplary scenarios demonstrating operational functionality of embodiments of the present invention.

Vehicle not moving; disabling device installed:

| | |
|---|---|
| Motion detector: | Power available from disabling device battery |
| Power source (battery): | Active (charging) |
| MCU: | Recognizes connectivity to the motion detector via internal programming, physical switch or software switch; analyzes the signal from the motion detector for the motion status of the vehicle |
| Signal generator: | Inactive |
| Cellular Radio: | Inactive |

Vehicle moving; disabling device installed

| | |
|---|---|
| Interface: | Power available from the disabling device is battery |
| Power source (battery): | Active |
| MCU: | Recognizes connectivity to the motion detector via internal programming, physical switch, or software switch; analyzes the signal from the motion detector for the motion status of the vehicle |
| Signal generator: | Sends the disabling signal nominally every twenty (20) seconds |
| Cellular Radio: | Inactive |

Vehicle in motion or not in motion; disabling device Installed; power from (primary) battery is unavailable for a predetermined period of time (e.g. two minutes)

| | |
|---|---|
| Motion detector: | Inactive |
| Power source (Primary battery): | Inactive; not charging |
| Backup Power Source (Back-up battery): | Active; Powers the MCU and the |
| | cellular radio |
| MCU: | Recognizes connectivity to the motion detector via internal programming, physical switch or software switch; analyzes the signal from the motion detector for the motion status of the vehicle; recognizes (primary) battery power is unavailable for predetermined period of time (e.g. two minutes); initiates monitoring alert (e.g. push notification) indicating no (primary) battery power to the disabling device for a defined time period |
| Signal generator: | Inactive |
| Cellular Radio: | Transmits a monitoring alert to the monitoring party's device that the (primary) battery is not operational |

### Exemplary Electronic Devices - Mobile Device and Disabling Device

Regarding mobile devices, devices may readily employ embodiments of the invention regardless of their intent to provide mobility. In this regard, even though embodiments of the invention are described in conjunction with a mobile device, it should be understood that embodiments of the invention may be utilized in conjunction with a variety of other electronic devices.

The devices may each comprise a processor or other processing circuitry. As used in this application, the term 'circuitry' refers to at least all of the following: hardware-only implementations (such as implementations in only analog and/or digital circuitry) and to combinations of circuits and software and/or firmware such as to a combination of processors or portions of processors/software including digital signal processor(s), software, and memory(ies) that work together to cause an apparatus, such as a mobile phone or tablet, to perform various functions and to circuits, such as a microprocessor(s) or portion of a microprocessor(s), that require software or firmware for operation, even if the software or firmware is not physically present. This definition of 'circuitry' applies to all uses of this term in this application, including in any claims. As a further example, as used in this application, the term "circuitry" would also cover an implementation of merely a processor, multiple processors, or portion of a processor and its (or their) accompanying software and/or firmware.

Further, the processor(s) may comprise functionality to operate one or more software programs, which may be stored in memory and which may, among other things, cause the processor to implement at least one embodiment including, for example, one or more of the functions described above. The mobile device may comprise a user interface for providing output and/or receiving input. The mobile device may comprise an output device such as a ringer, a conventional earphone and/or speaker, a microphone, a display, and/or a user input interface, which are coupled to the processor. The user input interface, which allows the electronic device to receive data, may comprise means, such as one or more devices that may allow the electronic device to receive data, such as a keypad, a touch display, for example if the display comprises touch capability, and/or the like.

The devices may comprise a memory device including volatile memory, such as volatile Random Access Memory (RAM) including a cache area for the temporary storage of data. The devices may also comprise other memory, for example, non-volatile memory, which may be embedded and/or may be removable. The non-volatile memory may comprise an EEPROM, flash memory or the like. The memories may store any of a number of pieces of information, and data. The information and data may be used by the devices to implement one or more functions of the devices.

Embodiments of the invention may be implemented in software, hardware, application logic or a combination of software, hardware, and application logic. The software application logic and/or hardware may reside on the apparatus, a separate device, or a plurality of separate devices. If desired, part of the software application logic and/or hardware may reside on the apparatus, part of the software, application logic and/or hardware may reside on a separate device, and part of the software, application logic and/or hardware may reside on a plurality of separate devices. In an example embodiment, the application logic, software or an instruction set is maintained on any one of various conventional computer-readable media. In the context of this document, a "computer-readable medium" may be any tangible media or means that can contain, or store the instructions for use by or in connection with an instruction execution system, apparatus, or device, such as a computer, with two examples of a computer described and depicted in FIGS. 1 and 6. A computer readable medium may comprise a computer-readable storage medium that may be any tangible media or means that can contain or store the instructions for use by or in connection with an instruction execution system, apparatus, or device, such as a computer.

Alternative embodiments of the present invention include use of the app for altering the system configuration of mobile device that enter a certain area. For example, the app could be installed on mobile devices of employees of a certain workplace or on the mobile devices of students of a school to avoid distracting features of the mobile device such as texting, internet, or photography. The disabling signal would be transmitted by an existing or previously installed signal generator as described above; however, the mechanism triggering the disabling signal would be, for example, an physical on/off switch or a software timer that turned the disabling signal on and off at certain times of the day, rather than motion status of the vehicle. The app would query a list, or whitelist, of media access control (MAC) addresses to determine if a received disabling signal is coming from a valid source as described previously. Alerts such as the removal of the primary app or secondary app would be communicated to a monitoring party (such as the workplace owner) device as described previously.

## Claims

1. A disabling device (101) for limiting mobile device functionality in a vehicle comprising:
a motion detector (103);
a microcontroller (104) in communication with the motion detector, wherein the microcontroller is configured to receive a motion status of the vehicle from the motion detector; and a signal generator (106) in communication with the microcontroller, wherein the signal generator is configured to transmit a disabling signal responsive to receipt of the motion status of the vehicle indicating that the vehicle is in motion,
wherein said disabling device is adapted to sense removal of the disabling device from the vehicle, and wherein the disabling device is adapted to transmit a removal alert to a monitoring party's device responsive to the disabling device's sensing that the disabling device has been removed from the vehicle, said removal alert indicating that the disabling device has been removed from the vehicle.

2. The device of claim 1, further comprising:
a cellular radio (105) in communication with the microcontroller, wherein the cellular radio is configured to transmit an alert to a monitoring party's device when the microcontroller detects a monitoring event has occurred.

3. A system of limiting mobile device functionality in a vehicle comprising:
a device of claim 1 or 2 and a mobile device (102) for receiving the disabling signal, wherein a Device Owner Application on the mobile device is configured to alter the mobile device's system configuration responsive to the disabling signal.

4. The system of claim 3, wherein the Device Owner Application residing on the mobile device is configured to alter the mobile device's system configuration to restrict the mobile device's ability to send and receive text messages and email messages.

5. The system of claim 4, wherein the Device Owner Application residing on the mobile device is configured to further alter the mobile device's system configuration to restrict the mobile device's ability to respond user input.

6. The system of claim 1, wherein the Device Owner Application residing on the mobile device is configured to alter the mobile device's system configuration to restrict the mobile device's ability to place and receive phone calls.

7. The system of claim 3, wherein the Device Owner Application residing on the mobile device is configured to further alter the mobile device's system configuration to restrict the mobile device's ability to place and receive phone calls requiring user interaction with a touch screen or a keyboard of the mobile device.

8. The system of claim 3, wherein the disabling device further comprises a cellular radio (105) in communication with the microcontroller, wherein the cellular radio is configured to transmit an alert when a monitoring event has occurred.

9. The system of claim 8, further comprising:
a monitoring party's device (111) configured for receiving the alert from the cellular radio.

## Patentansprüche

1. Außerkraftsetzungsvorrichtung (101) zur Begrenzung der Mobilvorrichtungsfunktionalität in einem Fahrzeug, umfassend:
einen Bewegungsdetektor (103);
eine Mikrosteuerung (104) in Kommunikationsverbindung mit dem Bewegungsdetektor, wobei die Mikrosteuerung dazu ausgelegt ist, einen Bewegungsstatus des Fahrzeugs vom Bewegungsdetektor zu empfangen; und einen Signalgenerator (106) in Kommunikationsverbindung mit der Mikrosteuerung, wobei der Signalgenerator dazu ausgelegt ist, ein Außerkraftsetzungssignal im Ansprechen auf den Empfang des Bewegungsstatus des Fahrzeugs, der angibt, dass das Fahrzeug in Bewegung ist, zu übertragen,
wobei die Außerkraftsetzungsvorrichtung dazu angepasst ist, ein Entfernen der Außerkraftsetzungsvorrichtung aus dem Fahrzeug abzufühlen, und wobei die Außerkraftsetzungsvorrichtung dazu angepasst ist, an eine Überwachungsparteivorrichtung im Ansprechen auf das Außerkraftsetzungsvorrichtungsabfühlen eine Entfernungswarnung zu übertragen, dass die Außenkraftsetzungsvorrichtung aus dem Fahrzeug entfernt wurde, wobei die Entfernungswarnung angibt, dass die Außerkraftsetzungsvorrichtung aus dem Fahrzeug entfernt wurde.

2. Vorrichtung nach Anspruch 1, darüber hinaus umfassend:
eine Mobilfunkeinheit (105) in Kommunikationsverbindung mit der Mikrosteuerung, wobei die Mobilfunkeinheit dazu ausgelegt ist, eine Warnung an die Überwachungsparteivorrichtung zu übertragen, wenn die Mikrosteuerung erfasst, dass ein Überwachungsereignis eingetreten ist.

3. System zur Begrenzung der Mobilvorrichtungsfunktionalität in einem Fahrzeug, umfassend:
eine Vorrichtung nach Anspruch 1 oder 2, und ein mobiles Gerät (102) zum Empfangen des Außerkraftsetzungssignals, wobei eine Geräteeigner-Anwendung auf dem mobilen Gerät dazu ausgelegt ist, die Mobilgerätsystemkonfiguration im Ansprechen auf das Außerkraftsetzungssignal zu verändern.

4. System nach Anspruch 3, wobei die auf dem mobilen Gerät ansässige Geräteeigner-Anwendung dazu ausgelegt ist, die Mobilgerätsystemkonfiguration zu verändern, um die Mobilgerätfähigkeit einzuschränken, Text- und Emailnachrichten zu verschicken und zu empfangen.

5. System nach Anspruch 4, wobei die auf dem mobilen Gerät ansässige Geräteeigner-Anwendung dazu ausgelegt ist, die Mobilgerätsystemkonfiguration darüber hinaus zu verändern, um die Mobilgerätfähigkeit einzuschränken, auf eine Benutzereingabe zu reagieren.

6. System nach Anspruch 1, wobei die auf dem mobilen Gerät ansässige Geräteeigner-Anwendung dazu ausgelegt ist, die Mobilgerätsystemkonfiguration zu verändern, um die Mobilgerätfähigkeit einzuschränken, Telefonanrufe zu tätigen und zu empfangen.

7. System nach Anspruch 3, wobei die auf dem mobilen Gerät ansässige Geräteeigner-Anwendung dazu ausgelegt ist, die Mobilgerätsystemkonfiguration darüber hinaus zu verändern, um die Mobilgerätfähigkeit einzuschränken, Telefonanrufe zu tätigen und zu empfangen, die eine Benutzerinteraktion mit einem Berührungsbildschirm oder einer Tastatur des mobilen Geräts erfordern.

8. System nach Anspruch 3, wobei die Außerkraftsetzungsvorrichtung eine Mobilfunkeinheit (105) in Kommunikationsverbindung mit der Mikrosteuerung umfasst, wobei die Mobilfunkeinheit dazu ausgelegt ist, eine Warnung zu übertragen, wenn ein Überwachungsereignis eingetreten ist.

9. System nach Anspruch 8, darüber hinaus umfassend:
eine Überwachungsparteivorrichtung (111), die dazu ausgelegt ist, die Warnung von der Mobilfunkeinheit zu empfangen.

## Revendications

1. Dispositif de désactivation (101) pour limiter la fonctionnalité d'un dispositif mobile dans un véhicule, comprenant :
un détecteur de mouvement (103) ;
un microcontrôleur (104) en communication avec le détecteur de mouvement, le microcontrôleur étant configuré pour recevoir du détecteur de mouvement un état de mouvement du véhicule ; et
un générateur de signaux (106) en communication avec le microcontrôleur, le générateur de signaux étant configuré pour transmettre un signal de désactivation en réponse à la réception de l'état de mouvement du véhicule indiquant que le véhicule est en mouvement ;
dans lequel
ledit dispositif de désactivation est adapté pour détecter le retrait du dispositif de désactivation du véhicule, et
le dispositif de désactivation est adapté pour transmettre une alerte de retrait à un dispositif d'une partie de surveillance en réponse à la détection par le dispositif de désactivation que le dispositif de désactivation a été retiré du véhicule, ladite alerte de retrait indiquant que le dispositif de désactivation a été retiré du véhicule.

2. Dispositif de la revendication 1, comprenant en outre :
une partie radio cellulaire (105) en communication avec le microcontrôleur, la partie radio cellulaire étant configurée pour transmettre une alerte au dispositif d'une partie de surveillance lorsque le microcontrôleur détecte qu'un événement de surveillance s'est produit.

3. Système de limitation de la fonctionnalité d'un dispositif mobile dans un véhicule, comprenant :
un dispositif selon la revendication 1 ou 2 et un dispositif mobile (102) pour recevoir le signal de désactivation,
dans lequel une application propriétaire du dispositif installée sur le dispositif mobile est configurée pour modifier la configuration du système du dispositif mobile en réponse au signal de désactivation.

4. Système selon la revendication 3,
dans lequel l'application propriétaire du dispositif installée sur le dispositif mobile est configurée pour modifier la configuration du système du dispositif mobile afin de restreindre la capacité du dispositif mobile à envoyer et recevoir des messages texte et des messages électroniques.

5. Système selon la revendication 4,
dans lequel l'application propriétaire du dispositif installée sur le dispositif mobile est configurée pour modifier en outre la configuration du système du dispositif mobile afin de restreindre la capacité du dispositif mobile à répondre à une entrée utilisateur.

6. Système selon la revendication 1,
dans lequel l'application propriétaire du dispositif installée sur le dispositif mobile est configurée pour modifier la configuration du système du dispositif mobile afin de restreindre la capacité du dispositif mobile à passer et recevoir des appels téléphoniques.

7. Système selon la revendication 3,
dans lequel l'application propriétaire du dispositif installée sur le dispositif mobile est configurée pour modifier en outre la configuration du système du dispositif mobile afin de restreindre la capacité du dispositif mobile à passer et recevoir des appels téléphoniques nécessitant une interaction de l'utilisateur avec un écran tactile ou un clavier du dispositif mobile.

8. Système selon la revendication 3,
dans lequel le dispositif de désactivation comprend en outre une partie radio cellulaire (105) en communication avec le microcontrôleur, la partie radio cellulaire étant configurée pour transmettre une alerte lorsqu'un événement de surveillance s'est produit.

9. Système selon la revendication 8, comprenant en outre :
un dispositif de partie de surveillance (111) configuré pour recevoir l'alerte de la partie radio cellulaire.
